Europäisches Patentamt

European Patent Office

Office européen des brevets

(11) Publication number: **0 344 338**
**A1**

## (12) EUROPEAN PATENT APPLICATION

(21) Application number: 88108628.4

(22) Date of filing: 30.05.88

(51) Int. Cl.⁴: **B29D 12/02** , **G02C 5/00** , **B05D 1/32**

(43) Date of publication of application:
06.12.89 Bulletin 89/49

(84) Designated Contracting States:
AT DE ES FR GB IT

(71) Applicant: KABUSHIKI KAISHA MINOWA GANKYO
2-7-35, Sakura-cho
Sabae-shi Fukui-ken(JP)

(72) Inventor: Minowa, Toshiaki
Kabushiki Kaisha Minowa Gankyo 2-7-35,
Sakura-cho
Sabae-shi Fukui-ken(JP)

(74) Representative: Wächtershäuser, Günter, Dr.
Tal 29
D-8000 München 2(DE)

(54) Method for manufacturing partially dyed synthetic resin frames of eyeglasses.

(57) A method for manufacturing partially dyed synthetic resin frame of eyeglasses is herein disclosed. The method is to provide a partially dyed frame of eyeglasses having very clear boundary between dyed portions and non-dyed portions and to make the manufacturing process simple. The method comprises applying a coating agent to the frame to form a film of the coating agent on the entire surface of the frame, cutting off a portion of the film, and dipping the frame in a dyeing liquid to dye the portion of the frame from which the film has been cut off.

EP 0 344 338 A1

EP 0 344 338 A1

## Method for manufacturing partially dyed synthetic resin frames of eyeglasses

The present invention relates to a method for manufacturing partially dyed synthetic resin frame of eyeglasses, more particularly to a method for manufacturing partially dyed synthetic resin frame of eyeglasses having a clear boundary between dyed portions and non-dyed portions thereof.

Recently frame of eyeglasses (hereunder referred to as --frames -- for simplicity), made from a synthetic resin have increasingly been used in place of those made from metals, since the frame of the synthetic resin has a variety of advantages such that it is lighter than metallic one and that it can easily be processed compared with the latter. It has also been known that frame of synthetic resins are dyed for the purpose of improving their fashionability, commercial value or the like.

As a relative method, there has been known "masking method" for manufacturing partially painted frame. Such conventional masking method comprises firstly dividing the surface of frame to be painted and those not to be painted by masking with masking member such as a strippable paint, a masking tape, a variable slitter frame provided with a cover plate, or the like on the portions not to be painted, and secondly applying to the frame a color paint through over the masking member to obtain frame having color pattern in part or wholly as shown in Japanese utility model gazette No. 51-110542(A).

Moreover, as a method for directly dyeing frame of synthetic resins, there has been proposed a method comprising coating a polymeric material only on portions of frame not to be dyed to form a film thereon for masking the portions, thereafter dyeing the frame by dipping it in a dyeing bath and then dis solving and removing the masking film with a solvent or the like.

However, the former method by coating a color paint on the frame through a masking member to form a color pattern suffers drawbacks such that the setting of the masking member is very difficult and complicated. One of such dificulties appears, for example, as masking portion called "islands" to be remained inside portion on forming letters as "O" or "A". Such "islands" portions used to be bridged with a small piece when the masking member is tape or cover plate. And also, the coating of the color paint cannot precisely be carried out since the color paint is coated through the masking member, in which causing hallation and/or unclearness by paint's rolling into edge of the masking member.

Alternatively, the latter method by masking only portions of the frame not to be dyed firstly and then dyeing the remaining portions of the frames also has disadvantages such that the boundary between the portions dyed and non-dyed and the clearness thereof are incomplete, that techniques in high level are required on manufacturing and that the resulting product becomes expensive.

The invention as claimed is intended to remedy these drawbacks and to provide a new method for manufacturing partially dyed synthetic resin frame of eyeglasses having a clear boundary between dyed portions and non-dyed portions thereof.

The purpose of the present invention can be effectively accomplished by providing a method for manufacturing partially dyed synthetic resin frame of eyeglasses which comprises applying a coating agent to the frame to form a film of the coating agent on the entire surface of the frame, cutting off a portion of the film in a desired pattern or the like, and dipping the frame in a dyeing liquid to dye the portion of the frame from which the film has been cut off.

According to the method of this invention, the frames of synthetic resin should be those capable of being dyed and materials therefor may be a cellulose acetate (CA), celluloid, propyl cellulose (CP), polyamide, polyurethane resin or epoxy resin.

The coating agent to be formed at the first step serves as a mask for preventing the frame from dyeing. The coating agent may be capable of being dyed one or incapable of being dyed one. When incapable one is used, the agent should be a transparent one. When capable one is used, the method needs a further step removing the remaining film other than cutt off.

As materials for coating agents, they may be those conventionally known such as polysiloxane type materials, fluorinated polymeric materials and epoxy-acrylate type polymeric materials. In this respect, if a hard coat agent which can be provide a so-called polysiloxane type film is used as the coating agent, the method of this invention is effectively adopted. In this case, the film remaining on the frames after dyeing procedure is not necessarily removed.

The cutting of the second step is accomplished by, for instance, employing a hard metal bit or a diamond grindstone. The cutting step is advatageous not only in that it removes a portion of the film, but at the same time it engraves a desirable pattern and/or initial letters onto the surface of the frame.

In the dipping step to dye the surface in a given pattern et al by cutting, the dyeing liquid used herein may be any kinds of known dyeing liquids capable of dyeing the frame of synthetic resin. For example, such liquid may be one having the following composition:

2

| Disperse Dye: | 2 to 5 g/l |
| Dispersant: | 1 to 50 g/l |
| Carrier Solvent: | 10 to 30 g/l |

The procedure for dyeing the frame is in general carried out at a temperature of from about 30 to 95°C. The time for dipping the frame in the dyeing liquid may vary with a function of the kinds of the coating agent of the film, the concentration, the temperature of the dyeing liquid and/or the intended degree of dyeing, but in general the time therefor ranges from 3 seconds to 5 minutes.

After the dyeing procedure, the frame of the synthetic resin is sufficiently washed with water and then dried. In use of coating agent capable being dyed, the dyed film remaining after the dyeing procedure is removed and the resultant frame is washed with water and then dried to obtain an intended frame dyed in a desired pattern and/or initial letters. In this respect, the removal of the remaining dyed film may be carried out by dissolving it with a proper solvent.

Moreover, the procedures of the method according to the present invention can be repeated twice or more to obtain a frame having a pattern or initial letters dyed at two or more different colors. In other words, frame having a pattern or initial letters of multicolor may be produced by repeating the procedures of the method of this invention. This possibly makes the fashionability and commercial value of the frame more higher.

According to the method of this invention, the first step of forming a film on the entire surface of the frame is much easier than forming a mask on only a portion of the frame. The second step of cutting with a grinding tool et al is relatively simple, and the boundary lines between the cut portions and the uncut portions are extremely sharp and remain sharp and clear after dyeing.

Moreover, the processes can substantially be simplified by using a transparent coating agent incapable of being dyed such as polysiloxane resin et al for the film serving as the masking member. In this case, it is not necessary to remove the remaining film.

Thus, the method according to the present invention makes it possible to provide frame having a wide variety of dyed patterns in which the boundary between the portions dyed and nondyed is quite clear.

The present invention will be described in detail below with reference to the attached drawings which illustrate two specific embodiments, in which:

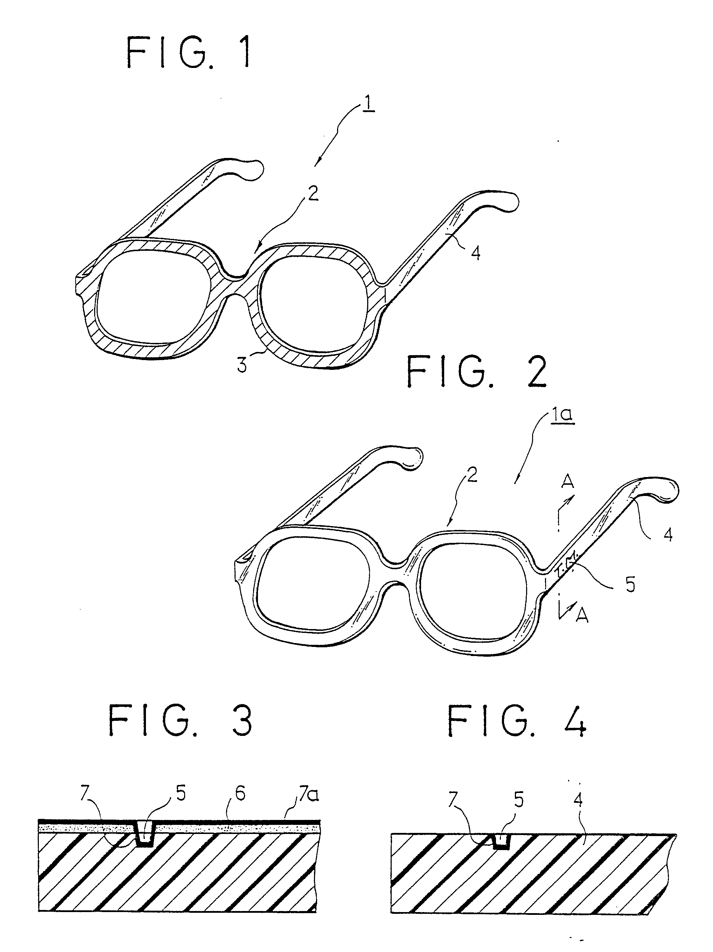

Fig. 1 is a perspective view showing a partially dyed frame obtained according to an embodiment of the method of this invention; Fig. 2 is a perspective view showing another partially dyed frame obtained according to another embodiment of the method of this invention; Fig. 3 is enlarged A-A section view in Fig. 2 after dyeing; and Fig 4 is the same section view of Fig. 3 in which the remaining film was removed.

## Example 1

A condensate was prepared by treating with 0.01N aqueous hydrochloric acid solution to a mixture of 200 parts by weight of γ-glycidoxypropylmethyldiethoxysilane, 100 parts by weight of vinyltriethoxysilane and 300 parts by weight of ethanol, under stirring and leaving to stand the reaction solution for a day to stabilize it. To the resultant partially condensed hydrolyzate there were added 100 parts by weight of oxalic acid and 3 parts by weight of a silicone type surfactant, the resulting liquid was sufficiently stirred at a normal temperature and thereafter, it was left to stand over two days to obtain a coating liquid.

Frame 1 of propionate resin which was previously washed sufficiently and pretreated was dipped in the coating liquid prepared above and then the coating liquid applied onto the surface of the frame was cured by placing the entirely coated frame in a circulating hot-air drier maintained at 60°C for 5 hours.

The polysiloxane resin film existing on the front frame portion 2 was cut off with a diamond grindstone while injecting cold air thereto and the portion from which the film was removed was polished with a buff. The frame thus processed was dyed under the conditions as follows:

| Conditions of dyeing | |
|---|---|
| (Composition of the dyeing bath) | |
| Disperse dye | |
| DIANIX yellow AC-E<br>DIANIX red AC-E | 2 g<br>2 g |
| (manufactured and sold by Mitsubishi Chemical Industries Ltd.) | |
| Carrier Solvent (benzylalcohol)<br>Dispersant S-225 | 10 g<br>3 g |
| (manufactured and sold by Soken Sangyo Co. Ltd.) | |
| Pure water<br>(Bath temperature)<br>(Dyeing time) | 1 l<br>60 °C<br>30 sec. |

As a result, a frame 1 which was dyed clear orange color only at the front portion 3 of the frame as shown in Fig. 1 was produced and the frame obtained had high commercial value and good fashionability compared with those conventionally obtained.

Example 2

An ultrviolet-curing resin UN-246M (manufactured and sold by Harima Chemical Industries Co. Ltd.) mainly composed of a modified epoxy-acrylate resin was diluted with a thinner to prepare a coating liquid having a viscosity of 1000 to 1200 cps.

Frame 1a of polyacrylamide, which was pretreated of washing with water and de-waxing was immersed in the coating liquid prepared above, air-dried for about 30 minutes and thereafter the frame was uniformly irradiated with UV light for 5 to 10 seconds in a UV irradiation furnace.

A pattern 5 of initial letters was formed on the temple 4 of the frame thus obtained by cutting or engraving with a hard metal bit in such pattern as shown in Fig 2 and 3. Then the frame was dyed under the conditions as follows:

| Conditions of dyeing | |
|---|---|
| (Composition of the dyeing bath) | |
| Disperse dye | |
| DIANIX blue RN-E | 4 g |
| (manufactured and sold by Mitsubishi Chemical Industries Ltd.) | |
| Surfactant SUNSALT 7000 | 5 g |
| (manufactured and sold by Nikka Chemical Industries Ltd.) | |
| Pure water<br>(Bath temperature)<br>(Dyeing time) | 1 l<br>90 to 93 °C<br>3 minutes |

According to this dyeing procedure, the film 6 of the coating agent and the part of the frame from which the film was removed in the form of initial letters 5 as shown in Fig. 2 were dyed blue 7. Thereafter, the coated film 6 remaining on the frame and dyed blue 7a was dissolved and removed by dipping it in an aqueous alkali solution of pH 14. Thus, frame of synthetic resin having clear pattern 5 of the initial letters

4

dyed blue 7 on its temple 4 was produced.

In the foregoing examples, only polysiloxane resin as incapable of being dyed film and an epoxy-acrylate resin as capable being dyed film was used, however, it should be appreciated that the present invention is not limited to these specific ones.

## Claims

1. A method for manufacturing a partially dyed synthetic resin frame for eyeglasses which comprises applying a coating agent to the frame to form a film of the coating agent on the entire surface of the frame, cutting off a portion of the film, and dipping the frame in a dyeing liquid to dye the portion of the frame from which the film has been cut off.

2. The method as claimed in claim 1, wherein the film is not dyed by the dye in the dyeing liquid.

3. The method as claimed in claim 1, wherein the film is dyed by the dye in the dyeing liquid, and which further comprises removing the portion of the film which was not cut off prior to dipping the frame in the dyeing liquid.

4. A partially dyed synthetic resin frame for eyeglasses obtained according to the method as claimed in claim 1.

EA-6464

# FIG. 1

# FIG. 2

# FIG. 3

# FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 158 368 (HONDA GIKEN KOGYO K.K.) * Claim 1 * | 1 | B 29 D 12/02 G 02 C 5/00 B 05 D 1/32 |
| Y | US-A-4 531 947 (D.R. ENGELHARDT) * Claim 1 * | 1 | |
| A | US-A-4 358 482 (W.J. JUBELT) * Column 2, lines 1-28; column 3, lines 65-68; column 4, lines 27-30 * | 1 | |

TECHNICAL FIELDS
SEARCHED (Int. Cl.4)

B 05 D
B 29 D

The present search report has been drawn up for all claims

| Place of search | Date of completion of the search | Examiner |
|---|---|---|
| THE HAGUE | 27-01-1989 | VAN THIELEN J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P0401)